# EUROPÄISCHE PATENTSCHRIFT

(11) **EP 4 242 497 B1**
(45) Veröffentlichungstag und Bekanntmachung des Hinweises auf die Patenterteilung: **18.12.2024**
(21) Anmeldenummer: 23158091.1
(22) Anmeldetag: 23.02.2023
(51) Int. Cl.: F16J 15/16, F16J 15/3248, F16J 15/328, F16J 15/3284, F16J 15/3224, F16J 15/3268, F16J 15/00, F16J 15/3272

(54) **DICHTUNG UND VERFAHREN ZU DEREN HERSTELLUNG**
SEAL AND METHOD FOR THE PRODUCTION THEREOF
JOINT D'ÉTANCHÉITÉ ET SON PROCÉDÉ DE FABRICATION

(30) Priorität: 07.03.2022 DE 102022105295
(43) Veröffentlichungstag der Anmeldung: 13.09.2023
(73) Patentinhaber: Carl Freudenberg KG, 69469 Weinheim (DE)
(72) Erfinder: Barillas, Gonzalo, 36304 Alsfeld-Altenburg (DE); Ilinseer, Albert, 21220 Seevetal (DE); Fink, Andrej, 21217 Seevetal (DE); Kuhnert, Jens, 21244 Buchholz (DE); Strübing, Frank, 22949 Ammersbek (DE); Fietz, Roland, 35279 Neustadt-Momberg (DE)

(56) Entgegenhaltungen:
- EP-A1- 1 701 070
- DE-A1- 102010 051 403
- US-A- 6 045 136
- US-A1- 2019 120 385

## Beschreibung

### Technisches Gebiet

Die Erfindung betrifft eine Dichtung und ein Verfahren zu deren Herstellung. Die Dichtung umfasst eine spiralisierte Profilschnur aus mindestens einem thermoplastischen Elastomerwerkstoff mit einem Halteteil und mit zumindest einer Dichtlippe, die einander in radialer Richtung gegenüberliegend angeordnet sind, wobei die Profilschnur in axialer Richtung benachbart zueinander angeordnete und ineinander übergehende Wendel umfasst und stirnseitig beiderseits offene Stirnseiten aufweist.

### Stand der Technik

Eine solche Dichtung ist aus der US 6.045.136 bekannt. Die ineinander übergehenden Wendel zwischen den beiden offenen Stirnseiten haben eine konstante Steigung, so dass das durch die Wendel gebildete Wendelpaket im Bereich der einander gegenüberstehenden offenen Stirnseiten eine axiale Breite aufweist, die um die Breite einer Wendel größer ist als die axiale Breite eines Wendelpakets, das aus einer entsprechenden Anzahl kreisringförmig in sich geschlossener Wendel bestehen würde.

Im Vergleich zur Anzahl ihrer Wendel weist die vorbekannte Dichtung vergleichsweise große Abmessungen in axialer Richtung auf und füllt ihren Einbauraum nicht im Wesentlichen vollständig aus.

Eine weitere Dichtung der eingangs genannten Art ist aus der US 2019/0120385 A1 bekannt. Auch diese Dichtung besteht aus einer spiralisierten Profilschnur, die in axialer Richtung benachbart zueinander angeordnete und ineinander übergehende Wendel umfasst und stirnseitig beiderseits offene Stirnseiten aufweist.

Auch hier haben die Wendel zwischen den offenen Stirnseiten eine konstante Steigung, mit den selben Nachteilen bezüglich der Abmessungen in axialer Richtung, die zuvor beschrieben sind.

Dichtungen und Verfahren zu deren Herstellung sind außerdem bekannt, zum Beispiel aus der DE 10 2010 051 403 A1.

Bei der vorbekannten Dichtung handelt es sich um einen in sich geschlossenen Dichtring.

Der Dichtring umfasst mehrere in axialer Richtung benachbart zueinander angeordnete Dichtungsprofile mit jeweils zumindest einer Dichtlippe und zumindest einer hakenförmigen Verbindungskralle, die der Dichtlippe, im Querschnitt des jeweiligen Dichtungsprofils betrachtet, benachbart zugeordnet ist.

Die Aufgabe, die dem vorbekannten Dichtring zugrunde liegt, wird darin gesehen, dass dieser einfach und kostengünstig herstellbar ist. Außerdem soll der Dichtring durch weitere Dichtungsprofile modular erweiterbar sein.

In Abhängigkeit vom jeweiligen Anwendungsfall können mehrere Dichtungsprofile zu dem Dichtring zusammengefügt werden. Die Dichtungsprofile können zum Beispiel aus mehreren Komponenten gefertigt sein und sind dadurch gut an den jeweiligen Anwendungsfall anpassbar. Jedes Dichtungsprofil besteht aus einem elastisch nachgiebigen Werkstoff, beispielsweise aus einem Polyurethan.

In einem ersten Verfahrensschritt wird ein bandförmiges Dichtungsprofil hergestellt und in einem zweiten Verfahrensschritt abgelängt. Das abgelängte Dichtungsprofil wird anschließend in einem dritten Verfahrensschritt ringförmig verformt, wobei die beiden freien Enden des ringförmig verformten Dichtungsprofils in einem vierten Verfahrensschritt miteinander verbunden werden.

Die Dichtungsprofile können beispielsweise durch ein Extrusionsverfahren hergestellt werden.

Aus der DE 27 05 067 A1 ist eine Mehrlippendichtung bekannt, die einzelne und in sich geschlossene Dichtringe umfasst, die übereinstimmend ausgebildet und in axialer Richtung durch jeweils eine Schnappverbindung aneinander festgelegt sind.

Oftmals werden die in sich geschlossenen Dichtringe für die Erstmontage im in sich geschlossenen Zustand montiert.

Für einen Austausch einer Dichtung können konstruktiv anspruchsvolle Dichtungsanordnungen, insbesondere solche mit großen Abmessungen, sinnvollerweise nicht zeit- und kostenaufwendig demontiert werden, nur um eine alte Dichtung durch eine neue zu ersetzen.

Sollte ein Austausch einer Dichtung erforderlich werden, wird deshalb der vorher durch Zerschneiden aufgetrennte Dichtring aus seinem Einbauraum in der Dichtungsanordnung zunächst entfernt und ein neuer, ebenfalls aufgetrennter Dichtring zum Beispiel um eine Welle der Dichtungsanordnung in seinen Einbauraum montiert. Dieser aufgetrennte neue Dichtring muss im Anschluss an seine Montage in einem Fügeprozess deckungsgleich zusammengefügt werden, um eine Leckage während seiner Verwendung zu vermeiden. Dieser Fügeprozess kann je nach eingesetztem Material des Dichtrings durch Verstiften, Kleben, Verschweißen oder Vulkanisieren erfolgen. Dabei können als Hilfsmittel Formwerkzeuge und/ oder Stifte im Querschnitt des Dichtrings zum Einsatz kommen.

Sowohl die Demontage eines alten als auch die Montage eines neuen Dichtrings sind dadurch unerwünscht zeit- und kostenaufwendig.

### Darstellung der Erfindung

Der Erfindung liegt die Aufgabe zu Grunde, eine Dichtung und ein Verfahren zu deren Herstellung derart weiterzuentwickeln, dass die Dichtung kompakte Abmessungen in axialer Richtung aufweist und ihren Einbauraum im Wesentlichen vollständig ausfüllt und dass die Dichtung einfach und kostengünstig herstellbar ist. Außerdem soll die Dichtung in einem Reparaturfall einfach austauschbar sein. Insbesondere sollen eine Demontage der alten Dichtung aus ihrem Einbauraum und eine Montage einer entsprechenden neuen Dichtung in den Einbauraum einfach möglich sein, ohne die alte Dichtung bei der Demontage zerstören zu müssen und ohne dass im Anschluss an die Montage der neuen Dichtung ein Fügeprozess an der Dichtung notwendig ist.

Diese Aufgabe wird erfindungsgemäß durch eine Dichtung mit den Merkmalen von Anspruch 1 und durch ein Verfahren mit den Merkmalen von Anspruch 8 gelöst. Auf eine vorteilhafte Ausgestaltung der Dichtung und auf eine Weiterbildung des Verfahrens nehmen die darauf jeweils rückbezogenen Ansprüche bezug.

Zur Lösung der Aufgabe ist eine Dichtung vorgesehen, umfassend eine spiralisierte Profilschnur aus mindestens einem thermoplastischen Elastomerwerkstoff mit einem Halteteil und mit zumindest einer Dichtlippe, wobei das Halteteil und die Dichtlippe einander in radialer Richtung gegenüberliegend angeordnet sind, wobei die Profilschnur in axialer Richtung benachbart zueinander angeordnete und ineinander übergehende Wendel umfasst und stirnseitig beiderseits offene Stirnseiten aufweist und wobei die Wendel ein Wendelpaket bilden, das einen im Wesentlichen rechteckigen Querschnitt aufweist, bei dem die offenen Stirnseiten jeweils in einer gedachten Radialebene mit den axial benachbart angrenzenden Wendeln angeordnet sind. Vorzugsweise ist der thermoplastische Elastomerwerkstoff ein TPU.

Hierbei ist von Vorteil, dass die Dichtung nicht als in sich geschlossener Dichtring ausgebildet ist. Die Dichtung ist vielmehr in Form einer Förderspirale ausgebildet, um während der bestimmungsgemäßen Verwendung der Dichtung abzudichtendes Medium kontinuierlich zurück in einen abzudichtenden Raum zu fördern. Abzudichtendes Medium ist beispielsweise ein Schmiermedium wie Schmierfett oder Öl.

Dabei ist zu beachten, dass die erfindungsgemäße Dichtung drehrichtungsabhängig funktioniert, zum Beispiel abhängig von der Drehrichtung einer relativ zur Dichtung rotierenden abzudichtenden Welle.

Dadurch, dass es sich bei der erfindungsgemäßen Dichtung nicht um einen in sich geschlossenen Dichtring handelt, ist diese besonders geeignet, um Großlager, zum Beispiel in Windkraftantrieben, abzudichten. Die abzudichtenden Durchmesser betragen in solchen Fällen üblicherweise mehr als 500 mm.

Die Wendel bilden ein Wendelpaket, das einen im Wesentlichen rechteckigen Querschnitt aufweist, bei dem die offenen Stirnseiten jeweils in einer gedachten Radialebene mit den jeweils axial benachbart angrenzenden Wendeln angeordnet sind. Durch eine solche Ausgestaltung ist von Vorteil, dass die Dichtung kompakte Abmessungen in axialer Richtung aufweist und ihren Einbauraum im Wesentlichen vollständig ausfüllt.

Die axiale Umformung der spiralisierten Profilschnur zum im Wesentlichen rechteckigen Wendelpaket findet an der Stelle der spiralisierten Profilschnur statt, an der die offenen Enden der Spirale sich gegenüberstehen.

Der Versatz der Umformung in axialer Richtung beträgt eine Profilbreite einer Wendel.

Die in axialer Richtung aneinander angrenzenden Wendel sind im Wesentlichen übereinstimmend ausgebildet.

Dabei weisen die Wendel in radialer Richtung einerseits das Halteteil und in radialer Richtung andererseits die Dichtlippe auf, wobei das Halteteil und die Dichtlippe entlang der axialen Richtung zwischen den offenen Stirnseiten jeweils einen im Wesentlichen konstanten Durchmesser aufweisen.

Die Dichtung gelangt in einem Einbauraum einer Dichtungsanordnung zur Anwendung, in dem das Halteteil zum Beispiel statisch dichtend relativ drehfest in einer Gehäusebohrung festgelegt ist. Die Gehäusebohrung ist von einer abzudichtenden Welle durchdrungen. Abgedichtet wird die abzudichtende Welle durch die Dichtlippe.

Die Wendel kann auf ihren einander axial zugewandten Seiten durch eine Schnappverbindung in radialer und in axialer Richtung formschlüssig aneinander festgelegt sein. Hierbei ist von Vorteil, dass sich die einzelnen Wendel der spiralisierten Profilschnur nicht relativ zueinander verlagern können; sie sind relativ ortsfest zueinander angeordnet. Dadurch ergeben sich gute Gebrauchseigenschaften während einer langen Gebrauchsdauer, insbesondere ein gutes Abdichtungsergebnis. Die Schnappverbindung hält nach der Montage der spiralisierten Profilschnur in einem Einbauraum einer Dichtungsanordnung die Wendel auf dem notwendigen Durchmesser formschlüssig zusammen. Die Montage der spiralisierten Profilschnur erfolgt in allen Fällen, also bei der Erstmontage und auch bei einem späteren Austausch, durch Einlegen der spiralisierten Profilschnur in den Einbauraum einer Dichtungsanordnung durch eine zunächst elastische Verformung und ein späteres Einschnappen der Schnappverbindung.

Die spiralisierte Profilschnur ist bevorzugt unter axialer elastischer Vorspannung in ihrem Einbauraum angeordnet.

Nach einer ersten Ausgestaltung kann es vorgesehen sein, dass die Profilschnur aus mindestens einem thermoplastischen Werkstoff besteht und dass das Halteteil und die Dichtlippe einstückig ineinander übergehend und materialeinheitlich ausgebildet sind. Hierbei ist von Vorteil, dass die Dichtung einfach und kostengünstig herstellbar ist. Außerdem ist von Vorteil, dass die Dichtung im Anschluss an ihre bestimmungsgemäße Verwendung sortenrein recyclebar ist.

Nach einer anderen Ausgestaltung kann es vorgesehen sein, dass die Profilschnur aus zwei voneinander abweichenden Werkstoffen für Halteteil und Dichtlippe besteht. Hierbei ist von Vorteil, dass das Halteteil und die Dichtlippe durch die für den jeweiligen Anwendungsfall jeweils besonders geeigneten Werkstoffe jeweils funktionstechnisch individualisiert sind. Dadurch wird die Profilschnur mittels des Halteteils besonders zuverlässig innerhalb des Einbauraums gehalten, und die Dichtlippe dichtet ein abzudichtendes Maschinenelement besonders zuverlässig ab.

Zumindest einer der Werkstoffe kann ein Polyurethan sein. Ein solcher Werkstoff hat den Vorteil, dass er gut thermoplastisch verarbeitbar ist. Bevorzugt wird die Profilschnur durch Extrusion hergestellt. Ein solches Verfahren ist rationell und kostengünstig durchführbar. Außerdem hat Polyurethan eine gute Verschleißfestigkeit und eine ausgezeichnete Abriebfestigkeit, eine hohe Festigkeit und eine hohe Bruchdehnung. Der Werkstoff ist innerhalb eines weiten Temperaturbereichs mineralölbeständig und weist eine ausgezeichnete Ozon- und Oxidationsbeständigkeit auf. Er hat ein gutes Dämpfungsverhalten, eine sehr gute Kälteflexibilität und eine hohe Beständigkeit gegen Rissbildung; der Werkstoff weist eine hohe Weiterreißfestigkeit auf.

Das Verfahren zur Herstellung der Dichtung ist dadurch gekennzeichnet, dass in einem ersten Verfahrensschritt eine spiralisierte Profilschnur hergestellt wird, wobei in einem zweiten Verfahrensschritt die spiralisierte Profilschnur entsprechend einer Einbaulänge eines Einbauraums in einer Dichtungsanordnung, in der die Dichtung zur Anwendung gelangen soll, abgelängt wird. Die Profilschnur wird bevorzugt aus einem thermoplastischen Polyurethangranulat extrudiert und in einem kontinuierlichen Umformungsprozess zu einem Dichtprofil geformt. Das Dichtprofil kann die zuvor beschriebene Schnappverbindung aufweisen.

Der Herstellungsprozess ist besonders einfach. Separate Werkzeuge wie bei der Vulkanisation oder der Rohrgießerei von Polyurethanen sind nicht notwendig.

Lediglich erforderlich ist ein Werkzeug für eine bestimmte Geometrie der Profilschnur, die dann für alle erforderlichen unterschiedlichen Durchmesser verwendet werden kann.

Das Verfahren erfolgt derart, dass ein Granulat über einen Extruder plastifiziert und durch ein erwärmtes Werkzeug kontinuierlich umgeformt wird.

In einem dritten Verfahrensschritt kann die spiralisierte Profilschnur in axialer Richtung zu dem im Wesentlichen rechteckigen Wendelpaket gestaucht werden, wobei im dritten Verfahrensschritt dabei gleichzeitig mit der axialen Stauchung zum Wendelpakte die Schnappverbindung zwischen den einander benachbarten Wendeln eingeschnappt wird. Dadurch ist die gebrauchsfertige Dichtung hergestellt.

### Kurzbeschreibung der Zeichnung

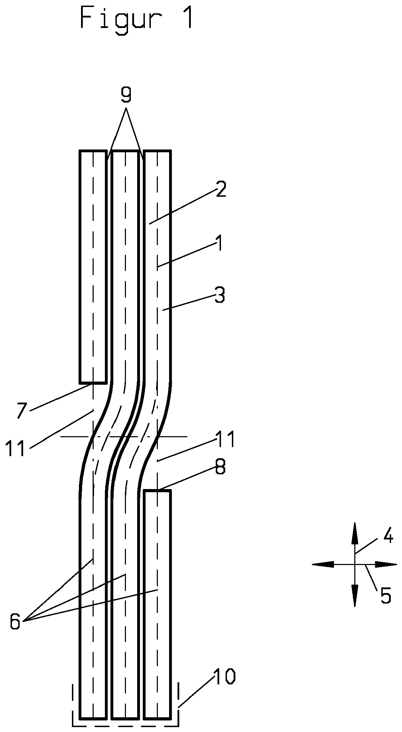

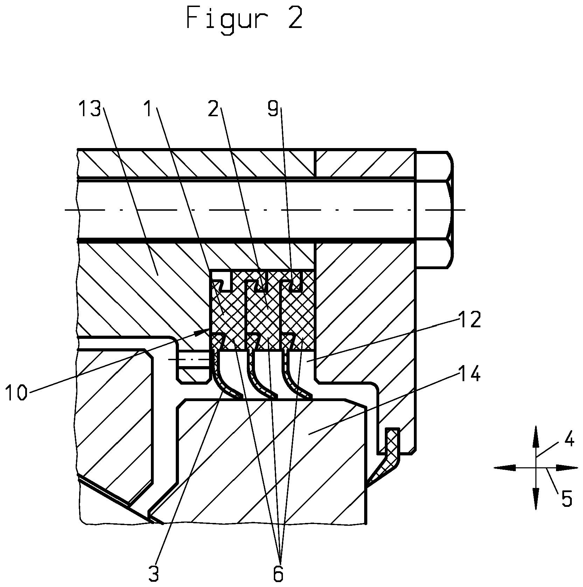

Ein Ausführungsbeispiel der erfindungsgemäßen Dichtung wird nachfolgend anhand der Figuren 1 und 2 näher erläutert.

Diese zeigen jeweils in schematischer Darstellung:
- Figur 1: die Dichtung als Einzelteil, wobei die spiralisierte Profilschnur das Wendelpakt bildet,
- Figur 2: die Dichtung aus Figur 1, eingebaut in den Einbauraum einer Dichtungsanordnung.

### Ausführung der Erfindung

In Figur 1 ist ein Ausführungsbeispiel der erfindungsgemäßen Dichtung gezeigt. Die Dichtung ist als Förderspirale ausgebildet und umfasst die spiralisierte Profilschnur 1 mit dem Halteteil 2 und der Dichtlippe 3. Das Halteteil 2 und die Dichtlippe 3 sind einander in radialer Richtung 4 gegenüberliegend angeordnet. Die Profilschnur 1 umfasst in axialer Richtung 5 benachbart zueinander angeordnete und ineinander übergehende Wendel 6 und weist stirnseitig beiderseits die offenen Stirnseiten 7, 8 auf.

Die Wendel 6 bilden das Wendelpaket 10 mit einem im Wesentlichen rechteckigen Querschnitt. Die offenen Stirnseiten 7, 8 sind jeweils in einer gedachten Radialebene 11 mit den jeweils axial benachbart angrenzenden Wendeln 6 angeordnet.

Um die Wendel 6 der spiralisierten Profilschnur 1 in radialer 4 und axialer Richtung 5 formschlüssig aneinander festzulegen, ist die Schnappverbindung 9 vorgesehen, wie in Figur 2 gezeigt.

In Figur 2 ist eine Dichtungsanordnung gezeigt, in der die Dichtung aus Figur 1 in einem Einbauraum 12 eines Gehäuses 13 angeordnet ist. Die Dichtung ist mit dem Halteteil 2 der spiralisierten Profilschnur 1 im Einbauraum 12 des Gehäuses 13 unter axialer Vorspannung drehfest angeordnet und umschließt mit der Dichtlippe 3 das abzudichtende Maschinenelement 14, hier in Form einer äußeren Lagerschale eines Wälzlagers, unter radialer Vorspannung dichtend.

## Patentansprüche

1. Dichtung, umfassend eine spiralisierte Profilschnur (1) aus mindestens einem thermoplastischen Elastomerwerkstoff mit einem Halteteil (2) und mit zumindest einer Dichtlippe (3), die einander in radialer Richtung (4) gegenüberliegend angeordnet sind, wobei die Profilschnur (1) in axialer Richtung (5) benachbart zueinander angeordnete und ineinander übergehende Wendel (6) umfasst und stirnseitig beiderseits offene Stirnseiten (7, 8) aufweist, **dadurch gekennzeichnet, dass** die Wendel (6) ein Wendelpaket (10) bilden, das einen im Wesentlichen rechteckigen Querschnitt aufweist, bei dem die offenen Stirnseiten (7, 8) jeweils in einer gedachten Radialebene (11) mit den jeweils axial benachbart angrenzenden Wendeln (6) angeordnet sind.

2. Dichtung nach Anspruch 1, **dadurch gekennzeichnet, dass** die Wendel (6) im Wesentlichen übereinstimmend ausgebildet sind.

3. Dichtung nach einem der Ansprüche 1 oder 2, **dadurch gekennzeichnet, dass** die Wendel (6) in radialer Richtung (4) einerseits das Halteteil (2) und in radialer (4) Richtung andererseits die Dichtlippe (3) aufweisen und dass das Halteteil (2) und die Dichtlippe (3) entlang der axialen Richtung (5) zwischen den Stirnseiten (7, 8) jeweils einen im Wesentlichen konstanten Durchmesser aufweisen.

4. Dichtung nach einem der Ansprüche 1 bis 3, **dadurch gekennzeichnet, dass** die Wendel (6) auf ihren einander axial zugewandten Seiten durch eine Schnappverbindung (9) in radialer (4) und axialer Richtung (5) formschlüssig aneinander festgelegt sind.

5. Dichtung nach einem der Ansprüche 1 bis 4, **dadurch gekennzeichnet, dass** die Profilschnur (1) aus einem thermoplastischen Werkstoff besteht und dass das Halteteil (2) und die Dichtlippe (3) einstückig ineinander übergehend und materialeinheitlich ausgebildet sind.

6. Dichtung nach einem der Ansprüche 1 bis 4, **dadurch gekennzeichnet, dass** die Profilschnur (1) aus zwei voneinander abweichenden Werkstoffen für Halteteil (2) und Dichtlippe (3) besteht.

7. Dichtung nach einem der Ansprüche 5 oder 6, **dadurch gekennzeichnet, dass** zumindest einer der Werkstoffe ein Polyurethan ist.

8. Verfahren zur Herstellung einer Dichtung nach einem der Ansprüche 1 bis 7, **dadurch gekennzeichnet, dass** in einem ersten Verfahrensschritt eine spiralisierte Profilschnur (1) hergestellt wird, wobei in einem zweiten Verfahrensschritt die spiralisierte Profilschnur (1) entsprechend einer Einbaulänge eines Einbauraums in einer Dichtungsanordnung, in der die Dichtung zur Anwendung gelangen soll, abgelängt wird.

9. Verfahren nach Anspruch 8, **dadurch gekennzeichnet, dass** in einem dritten Verfahrensschritt die spiralisierte Profilschnur (1) in axialer Richtung (5) zum im Wesentlichen rechteckigen Wendelpaket (10) gestaucht wird.

10. Verfahren nach Anspruch 9 zur Herstellung einer Dichtung nach dem Anspruch 4, **dadurch gekennzeichnet, dass** im dritten Verfahrensschritt, gleichzeitig mit der axialen Stauchung zum Wendelpaket (10), die Schnappverbindung (9) zwischen den Wendeln (6) eingeschnappt wird.

## Claims

1. Seal, comprising a spiralized profiled cord (1) made of at least one thermoplastic elastomer material with a holding part (2) and with at least one sealing lip (3), which are arranged opposite one another in the radial direction (4), wherein the profiled cord (1) comprises coils (6) which are arranged adjacent to one another in the axial direction (5) and merge into one another and have end faces (7, 8) which are open on both sides, **characterized in that** the coils (6) form a coil assembly (10), which has a substantially rectangular cross section, in which the open end faces (7, 8) are each arranged in an imaginary radial plane (11) with the respective axially adjacently adjoining coils (6).

2. Seal according to claim 1, **characterized in that** the coils (6) are substantially of the same design.

3. Seal according to one of Claims 1 or 2, **characterized in that** the coils (6) have the holding part (2) in the radial direction (4) on the one hand and the sealing lip (3) in the radial direction on the other, and **in that** the holding part (2) and the sealing lip (3) each have a substantially constant diameter along the axial direction (5) between the end faces (7, 8).

4. Seal according to one of Claims 1 to 3, **characterized in that** the coils (6) are fixed to each other form-fittingly on their axially facing sides by a snap connection (9) in a radial (4) and axial direction (5).

5. Seal according to one of Claims 1 to 4, **characterized in that** the profiled cord (1) consists of a thermoplastic material, and **in that** the holding part (2) and the sealing lip (3) merge into one another as a single piece and are formed as a single material.

6. Seal according to one of Claims 1 to 4, **characterized in that** the profiled cord (1) consists of two different materials for the holding part (2) and sealing lip (3).

7. Seal according to one of Claims 5 or 6, **characterized in that** at least one of the materials is a polyurethane.

8. Method for producing a seal according to one of Claims 1 to 7, **characterized in that** in a first method step a spiralized profiled cord (1) is produced, wherein in a second method step the spiralized profiled cord (1) is cut to length in accordance with an installation length of an installation space in a sealing arrangement in which the seal is to be used.

9. Method according to Claim 8, **characterized in that** in a third method step, the spiralized profiled cord (1) is compressed in an axial direction (5) to form the substantially rectangular coil assembly (10).

10. Method according to Claim 9 for producing a seal according to Claim 4, **characterized in that** in the third method step, the snap connection (9) between the coils (6) is snapped in at the same time as the axial compression to form the coil assembly (10).

## Revendications

1. Joint d'étanchéité, comprenant un cordon profilé spiralisé (1) constitué d'au moins une matière élastomère thermoplastique comportant une partie de retenue (2) et comportant au moins une lèvre d'étanchéité (3), qui sont disposées en regard l'une de l'autre dans la direction radiale (4), le cordon profilé (1) comprenant des spirales (6) disposées au voisinage les unes aux autres dans la direction axiale (5) et se prolongeant les unes dans les autres et présentant des côtés frontaux (7, 8) ouverts de manière bilatérale du côté frontal, **caractérisé en ce que** les spirales (6) forment un groupe de spirales (10) qui présente une section transversale sensiblement rectangulaire, dans laquelle les côtés frontaux ouverts (7, 8) sont disposés respectivement dans un plan radial imaginaire (11) avec les spirales (6) adjacentes de manière respectivement axialement voisine.

2. Joint d'étanchéité selon la revendication 1, **caractérisé en ce que** les spirales (6) sont réalisées de manière à coïncider sensiblement.

3. Joint d'étanchéité selon l'une quelconque des revendications 1 ou 2, **caractérisé en ce que** les spirales (6) présentent la partie de retenue (2) d'un côté dans la direction radiale (4) et la lèvre d'étanchéité (3) de l'autre côté dans la direction radiale (4) et **en ce que** la partie de retenue (2) et la lèvre d'étanchéité (3) présentent respectivement un diamètre sensiblement constant le long de la direction axiale (5) entre les côtés frontaux (7, 8).

4. Joint d'étanchéité selon l'une quelconque des revendications 1 à 3, **caractérisé en ce que** les spirales (6), sur leurs côtés tournés axialement les uns vers les autres, sont fixées les unes aux autres par complémentarité de formes dans la direction radiale (4) et la direction axiale (5) par une liaison par encliquetage (9).

5. Joint d'étanchéité selon l'une quelconque des revendications 1 à 4, **caractérisé en ce que** le cordon profilé (1) est constitué d'une matière thermoplastique et **en ce que** la partie de retenue (2) et la lèvre d'étanchéité (3) sont réalisées de manière à se prolonger d'une seule pièce l'une dans l'autre et en le même matériau.

6. Joint d'étanchéité selon l'une quelconque des revendications 1 à 4, **caractérisé en ce que** le cordon profilé (1) est constitué de deux matières différentes l'une de l'autre pour la partie de retenue (2) et la lèvre d'étanchéité (3).

7. Joint d'étanchéité selon l'une quelconque des revendications 5 ou 6, **caractérisé en ce qu'**au moins l'une des matières est un polyuréthane.

8. Procédé servant à la fabrication d'un joint d'étanchéité selon l'une quelconque des revendications 1 à 7, **caractérisé en ce que**, dans une première étape de procédé, un cordon profilé spiralisé (1) est fabriqué, dans une deuxième étape de procédé, le cordon profilé spiralisé (1) étant coupé à longueur conformément à une longueur d'installation d'un espace d'installation dans un ensemble d'étanchéité dans lequel le joint d'étanchéité doit être utilisé.

9. Procédé selon la revendication 8, **caractérisé en ce que**, dans une troisième étape de procédé, le cordon profilé spiralisé (1) est comprimé dans la direction axiale (5) pour former le groupe de spirales (10) sensiblement rectangulaire.

10. Procédé selon la revendication 9 servant à la fabrication d'un joint d'étanchéité selon la revendication 4, **caractérisé en ce que**, dans la troisième étape de procédé, simultanément à la compression axiale pour former le groupe de spirales (10), la liaison par encliquetage (9) entre les spirales (6) est encliquetée.
